# EUROPEAN PATENT SPECIFICATION

(11) **EP 0 857 246 B1**
(45) Date of publication and mention of the grant of the patent: **12.07.2006**
(21) Application number: 96937594.8
(22) Date of filing: 25.10.1996
(51) Int. Cl.: E21B 33/13

(54) **MEANS AND METHOD FOR THE PREPARATION OF SEALINGS IN OIL AND GAS WELLS**
ZUSAMMENSETZUNG UND VERFAHREN ZUR HERSTELLUNG VON ABDICHTUNGEN IN ÖL-ODER GASBOHRUNGEN
COMPOSITION ET PROCEDE POUR REALISER DES OBTURATIONS DANS LES PUITS DE GAZ NATUREL ET LES PUITS DE PETROLE

(30) Priority: 27.10.1995 NO 954298
(43) Date of publication of application: 12.08.1998
(73) Proprietor: Wellcem AS, 7014 Trondheim (NO)
(72) Inventor: DAHL-JÖRGENSEN, Einar, N-7079 Flataasen (NO); ÖYE, Bjarte, Arne, N-7032 Trondheim (NO)
(74) Representative: Olsson, Jan
(86) International application number: PCT/NO1996/000255
(87) International publication number: WO 1997/015746

(56) References cited:
- NO-B- 176 878
- NO-C- 176 878
- US-A- 5 048 607
- US-A- 5 346 013

## Description

The invention concerns an agent and a method for establishing different types of zone sealings in oil wells, gas wells and other well types located onshore or in the seabead, including wells in connection with exploitation of ground water.

### Background

When sealing water producing layers or establishing the sealing of well zones, coiled tubing or interconnectable pipes are inserted, the latter also used as drill stem which can be provided with expanding sealings to shut off the casing section in the zone in question. The zone to become isolated is then supplied with a sealant which is allowed to set and hence shut off the zone.

In the case of oil wells, this is done to shut off undesirable water or gas supply, and in the case of gas wells, is done to establish a seal against water supply and to isolate polluted zones in ground water wells.

Moreover, there may be a need for sealing the annulus between the tubing and the casing in wells because of damage to the tubing caused by collapse in formation and subsequent damage to pipes.

Another type of sealing method involves a shut off plug for wells which are to be shut off permanently or temporarily, or a so-called "kick-off" plug to prepare a site for the drilling of a new well from the remaining upper section of a former well.

In the drilling of multiple branched wells there is a need to reinforce and seal the transition zones of the surrounding formation. These transition zones are subject to large mechanical stresses.

The prior art methods make use of cement. However, a disadvantage of cement is that the curing step may require up to 24 hours, which is a disproportionately long period of time, and waiting time on the production site is a very costly operation when offshore. Another disadvantage is that the strength of cured cement material in certain applications is insufficient. A further disadvantage of cement is that in view of its particle based structure the material exhibits a relatively poor penetration capability in formations, which again may result in a reduced sealing effect.

NO Patent 176878 describes a polymer-based cementing agent for use in warm zones of a well at a temperature of 120-200°C, comprising diallyl phthalate (DAP), including isomers, prepolymers and/or oligomers of the same. The agent comprising the filler material among other things is polymerized by means of an initiator (organic peroxide) and prepares a cured sealing mass for different applications. A polymer based sealant of the type described in this patent has the general advantage of exhibiting relatively rapid curing after setting, contrary to cement in which the mass first sets and then cures gradually with time. The sealant of NO Patent 176878 is not applicable to well zones having more moderate temperatures, such as 5-120°C, and in many applications the curing time of the sealant will be too long and the mechanical strength of the cured mass will be too low. Another disadvantage of the unmodified DAP based polymer in such fields of application is that the cured polymer shrinks by 10-15 vol% compared to the starting composition. Therefore, the composition will have to be supplied with a shrink compensating additive in the form of a pre-dried bentonite.

### Object

The main object of the invention is to provide a polymer based sealant of the type described above for establishing different types of seals in well zones having a temperature of from 5 to 120°C, and wherein the sealant cures more rapidly, results in higher strength and reduces shrink in cured material, compared to prior art agents.

### The invention

This object is achieved by an agent and a method according to the characterizing section of claim 1 and 6, respectively. Other advantageous features appear from the respective dependent claims.

The agent according to the invention comprises a monomer, initiator, inhibitor and optional filler as well as other additives. According to the invention, the agent comprises a prepolymer in the form of an at least partially unsaturated polyester or epoxy vinylester, and moreover at least one vinyl-containing co-monomer.

A composition of this type can be used at far lower temperatures than prior art compositions and can achieve a sufficiently long pot life while simultaneously achieving a short curing time after initiation of the curing step. Moreover, because of its cross-linked co-polymer structure the cured mass establishes a strong and secure seal from a mechanical point of view, and maintains a desirable viscosity and pot life before initiation of the curing step. Another advantage of the present composition is that the resultant cured mass does not exhibit any volume reduction compared to the starting composition. The agent can in general be used in a temperature range of from 5 to 120°C.

The prepolymer can be selected in the form of polyester or epoxy vinylester, or a mixture of these. The composition, structure, degree of polymerization and content of double bonds in the prepolymer is not critical, but in general the composition viscosity will increase with increasing degree of polymerization of the prepolymer and with the quantity of the same in the composition. In order to obtain co-polymerization and cross-linking with the co-monomers, the prepolymer must naturally exhibit at least a certain degree of unsaturation.

It should be mentioned that US-A-5 346 013 describes a method to reduce the water production in oil wells by introducing a hydrophobic polymer solution into the reservoir. After the solution is in place, production in the well is commenced. From the place in the well where water is produced, the polymer will precipitate from the solution in the presence of the produced water and hence reduce or seal off the water producing zones. The present invention differs from this procedure by the fact that the zone in question to be sealed is supplied with a monomer and is polymerized in-situ in the reservoir. The pre-polymer according to the present invention is mainly a means to avoid the undesirable shrinkage. The substance described in US-A-5 346 013, is a prepolymerized polymer of a different type than defined in claim 1 and solved in a solution prior to the placement in the reservoir. Secondly, the polymer described in US-A-5 346 013 is activated when the produced water causes a precipitation of the polymer in the reservoir.

Furthermore, US-A-5 048 607 describes a method for profile control in an underground hydrocarbon, fluid containing formation or reservoir. The procedure describes a polymerization of a water-extern emulsion (O/W) in the formation to seal off zones with high permeability. The emulsion polymerizes in-situ and forms small polymer beads with a diameter less than 50 µm. The emulsion may contain styrene, propylene, or ethylene. The tech-nical effect is provided when the polymer particles that are formed in the formation will prevent influx of fluid or water. Zones with high permeability are closed off by means of the polymer particles and hydrocarbon-containing zones can be stimulated by other methods for enhanced oil recovery. The present invention relates primarily to cementing of the oil well and the near well formation, typically 0.5-1 meter into the formation in addition to plugging of wells. Furthermore, the emulsion according to US-A-5 048 607 will be polymerized such that small polymer beads are formed as opposed to the present invention whereafter polymerization is completed, a continuous phase is formed and not descrete polymer particles.

The polymer of US-A-5 048 607 is a different type of polymer than the one described in US-A-5 346 013, it is a technical solution based on an emulsion (i.e. containing water) and it is not to be expected to combine teachings from these two documents.

The co-monomer used with the present invention comprises in general vinyl groups. Examples of such compounds are styrene, vinyl toluene, 2-hydroxyethyl-methacrylate, 2-hydroxypropyl-methacrylate and diallylphthalate including isomers of the same. However, styrene has two disadvantages, first, the compound exhibits a low flash point, and the compound will not fulfill the security requirement with regard to handling and storage offshore (flash point above 55°C) if present in a sufficiently large quantity, and second, styrene has a pronounced smell and smells even at very low concentrations. For this reason it is preferred to use vinyl toluene, acrylate compounds and DAP, alone or in combination.

Examples of commercially available compositions ofprepolymers and monomers applicable in the present context are Norpol 68-00 DAP comprising 40% polyester prepolymer and 60% diallylphthalate; and Norpol 47-00 comprising 50% polyester prepolymer, 50% vinyl toluene and 50% 2-hydroxypropyl methacrylate, both from Jotun AS in Sandefjord, Norway.

The vinyl-containing co-monomer is typically present in a total quantity of 10-75 weight parts, whereas the prepolymer typically is present in a total quantity of 15-75 weight parts, and the total weight of prepolymer and co-monomer constitutes 100 weight parts. The quantity of initiator and inhibitor is adapted to the application in question, but in general the quantity of initiator will constitute from 0.5 to 3 weight parts and the inhibitor 0.05-1.5 weight parts.

The type of initiator and inhibitor is not critical and can be selected from materials that are normally used with radical polymerization. An example of a preferred inhibitor is parabenzoquinone, which exhibits the proper efficiency at elevated temperatures contrary to other inhibitors which often have poor efficiency at elevated temperatures. Other examples of inhibitors are hydroquinones, which by intense agitation will react with dispersed oxygen to form quinones. The quantity of the inhibitor is adapted to the prepolymer and monomer components in question including the desired pot life and curing time. In general the inhibitor is present in a quantity of from 0.02 to 2 weight parts, wherein the preferred quantity is 0.05 weight parts resulting in a proper exothermic process and a short curing time.

Organic peroxides can be used as the initiator, such as benzoyl peroxide (such as Akzo Cadox 40E), t-butyl-peroxy-3,3,5-trimethylhexanoate (for example Akzo Trigonox 42S), t-butyl-cumylperioxide (for example Akzo Trigonox T) and di t-butylperoxide (for example Akzo Trogonox B). The quantity of initiator in the composition is also adapted to the actual field of use, but in general the initiator quantity in the composition will be within the range 0.1-5 weight parts.

In use, the agent will be provided as a two-component composition, wherein the first component comprises for example the monomer and inhibitor and the second comprises the initiator. The quantity of the components therein is not critical as long as the respective monomers are not subjected to any self-polymerization of significance during transportation and storage.

If required, the composition can be supplied with known additives such as consistency controlling agents and weight materials.

Moreover, the composition can be supplied with a filler material comprising an inert solid material in order to reduce composition shrink during the curing process. The filler material increases the applicability of the composition during the curing step to a more bulky continous phase compared to penetration and curing in porous formations in which any shrink in the cured polymer is not critical.

The size of the solid inert filler material may be varied within wide limits dependent on the properties of the composition and its field of use. For example the size may be from a few micrometers to 1 mm, but typically 4-50 µm. In general a larger diameter may result in a risk of sedimentation of filler material in the composition before curing, and a smaller diameter may result in an increased viscosity up to an unacceptable level.

There are no specific requirements as to the type of material, but in general the filler material must be compatible with the field of use of the polymer, particularly curing temperature and operating temperature. It should also exhibit sufficient rigidity, for example 50-100 MPa, and it must be chemically inert. A preferred material for use as filler material is glass or glass-containing materials. The filler material typically constitutes 30-40 w% of the composition.

The geometry of the filler material may also be varied within wide limits, but in view of viscosity and handling we have found that generally spherical particles are preferred since this geometry will reduce the composition viscosity and accordingly increase its ease of handling compared to, for example, fibrous filler materials.

If the composition is filled with spherical glass beads, for example, the composition will obtain optimum rheological properties, and at the same time a polymer supplied with a shrink compensating agent containing PVAc can also be used for permanent plugging of wells by filling the production casing. The same type of filled polymer may also be used as reinforcement for transition areas in multi-branched wells. The advantage of this compared to cement is that the formation is penetrated and sealed combined with an increased resistance to cracking. The filled polymer is also applicable as a packe elements instead of the mud and cement commonly used today. The advantage of using thermoset plastic above cement is that the curing procedure can be limited to the packer element only, which is impossible with cement. Excess cement will also cure/harden outside the packers. The disadvantage of mud is that the packer may lose its sealing effect with time, due to deformation of the packer element. Another advantage of this emdbodiment is shrink compensation in the cured material at temperatures down to 45°C.

Table 1 below shows examples of compositions of different blend alternatives according to the invention. The mutual quantity relations may vary within wide limits, particularly in view of required viscosity, flash point and curing time as a function of temperature in the well and time required for pumping. The blend values below should therefore be interpreted as instructive.

**Table 1 Composition alternatives according to the invention All values are in weight parts**

| | *Composition* | | | | | | |
|---|---|---|---|---|---|---|---|
| | *A* | *B* | *C* | *D* | *E* | *F* | *G* |
| *Polyester* | 40 | 50 | 50 | 50 | 50 | 50 | |
| *Vinylester* | | | | | | | 50 |
| *DAP** | 60 | | 25 | 25 | | | 25 |
| *Vinyltoluene* | | 50 | 25 | | | | 25 |
| *Styrene* | | | | 25 | | | |
| *HPMA*** | | | | | 50 | | |
| *HEMA**** | | | | | | 50 | |
| *Inhibitor* | 0.05- | 0.05- | 0.05- | 0.05- | 0.05- | 0.05- | 0.05- |
| | 0.60 | 0.60 | 0.60 | 0.60 | 0.60 | 0.60 | 0.60 |
| *Initiator* | 1 | 1 | 1 | 1 | 1 | 1 | 1 |
| * = *Diallylphalate* | | | | | | | |
| ** = *2-hydroxypropyl-methacrylate* | | | | | | | |
| *** = *2-hydroxyethyl-methacrylate* | | | | | | | |

In the following, the invention is described by means of examples in order to illustrate some of the technical improvements achieved by the present composition compared to the prior art and by means of graphs, in which
Figure 1 shows temperature as a function of time recorded during curing of a polyester resin according to Example 1 cured at 70°C,
Figure 2 is an Arrhenius plot showing open time or "pot life" for a polyester prepared according to Example 1 as a function of temperature,
Figure 3 shows temperature as a function of time recorded during curing of a polyester resin according to Example 2 cured at 90°C,
Figure 4 is an Arrhenius plot showing open time or "pot life" for a polyester preprared according to Example 2 as a function of temperature,
Figure 5 shows temperature as a function of time recorded during the curing of a prior art diallylphthalate-based resin according to Example 3 cured at 70°C, and
Figure 6 shows temperature as a function of time recorded during the curing of a prior art diallylphthalate-based resin according to Example 3 cured at 90°C.

### Examples

Two different sealant compositions were prepared having a component composition substantially like Composition C in Table 1 above, including prior art compositions according to NO Patent 176878. Compositions according to the invention are stated in Example 1 and 2, whereas the prior art reference compositions are stated in Example 3 and 4. The compositions were prepared as identical as possible in order provide a best possible comparison of the compositions.

For simplicity the experiments were performed at atmospheric pressure, but a similar effect is proved also at real elevated pressures.

### Example 1: Preparation of polyester resin according to the invention with benzoyl peroxide.

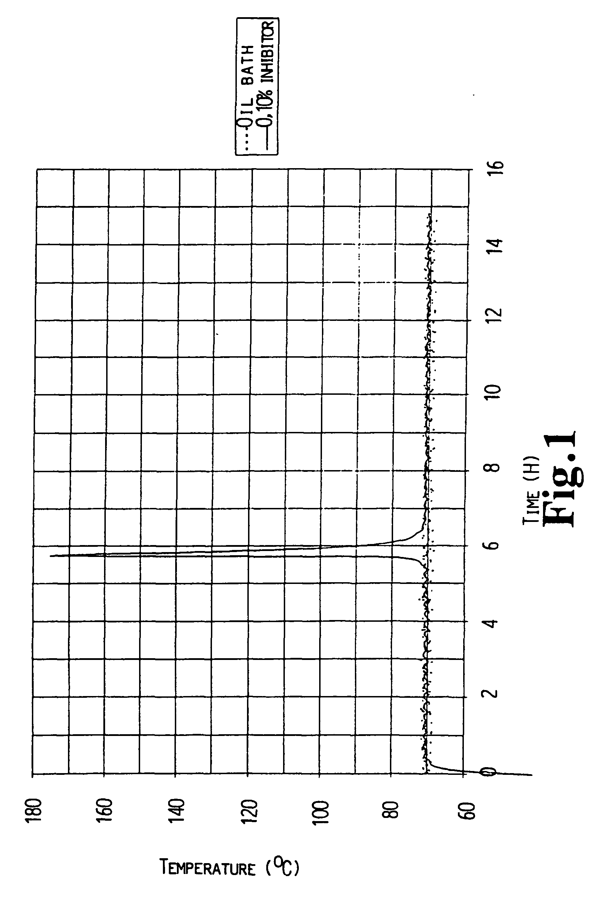

A resin was prepared from 50 g 100% polyester polymer, 25 g vinyltoluene, 25 g diallylphthalate, 1 g benzoylperoxide and 0.10 g *para*-benzoquinone. The homogenous liquid was transferred to a 25 ml graduated flask, which was located in a bath of silicon oil having a constant temperature of 70°C. The temperature was recorded with time both in the resin and the bath. The curing was performed at atmospheric pressure. Figure 1 shows the temperature profile for the environments (the oil bath) and for the polyester resin cured at 70°C. The exothermal curing reaction started apparently at 305 minutes, whereas the curing peak appeared after 325 minutes with an exotherm of 106°C.

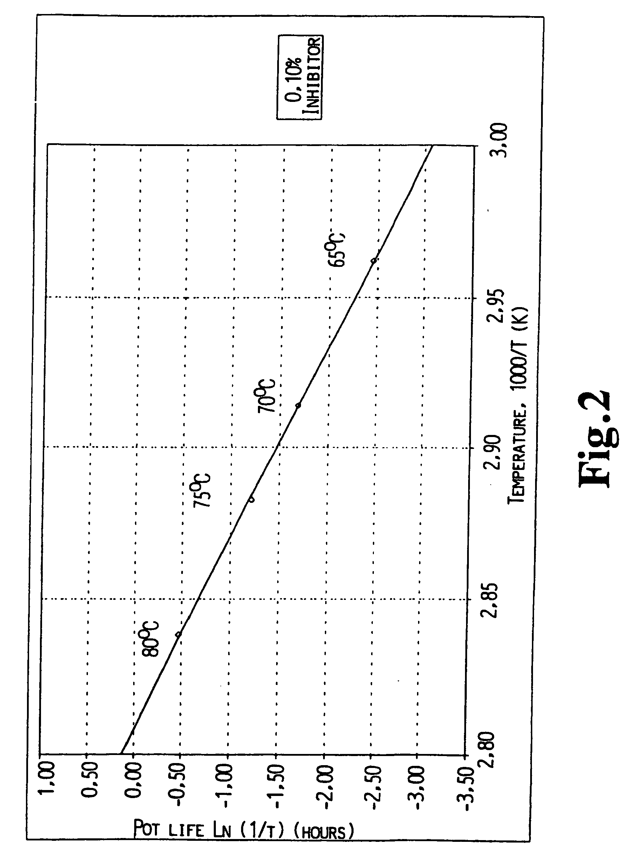

Experiments identical with the former experiment were performed at constant background temperatures of 65, 70, 75 and 80°C, respectively. According to the kinetics, the ratio between the natural logarithm of the inverse of the open time (pot life), ln(1/t), and the inverse of the absolute tempereature (T) in °K, 1/T, should be linear. From Figure 2 it is evident that a linear relationship is present, and this graph reproduces the linear relationship between open time (t) and temperature (T) of the polyester resin. Accordingly, such linear relationships can be used to obtain by interpolation the open time of a specific resin at a predetermined temperature.

Parallel compositions were prepared having an inhibitor concentration of 0.05, 0.10 and 0.20 wt% at each temperature level. The result from these experiments are summarized in Table 2 below, which shows the resulting curing time, exothermity and curing result.

### Example 2: Preparation of polyester resin according to the invention by using peroxy-3,3,5-trimethylhexanoate

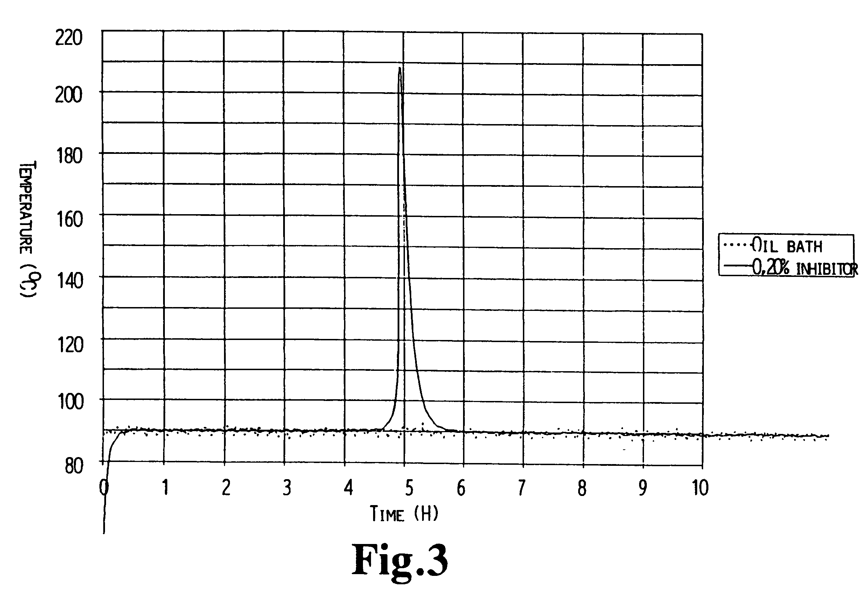

A resin was prepared from 50 g 100% polyester prepolymer, 25 g vinyltoluene, 25 g diallylphthalate, 1 g *tert*-butyl peroxy-3,3,5-trimethylhexanoate and 0.20 g *para-*benzoquinone. The homogenous liquid was transferred to a 25 ml graduated flask, which again was placed in a bath of silicon oil having a constant temperature of 90°C. The temperature of both the resin and the bath were recorded against time. The curing was performed at atmospheric pressure. Figure 3 shows the temperature profile of the environments (the oil bath) and of the polyester resin cured at 90°C. The exothermal curing reaction apparently started at 260 minutes and the curing peak appeared after 276 minutes with an exotherm of 118°C.

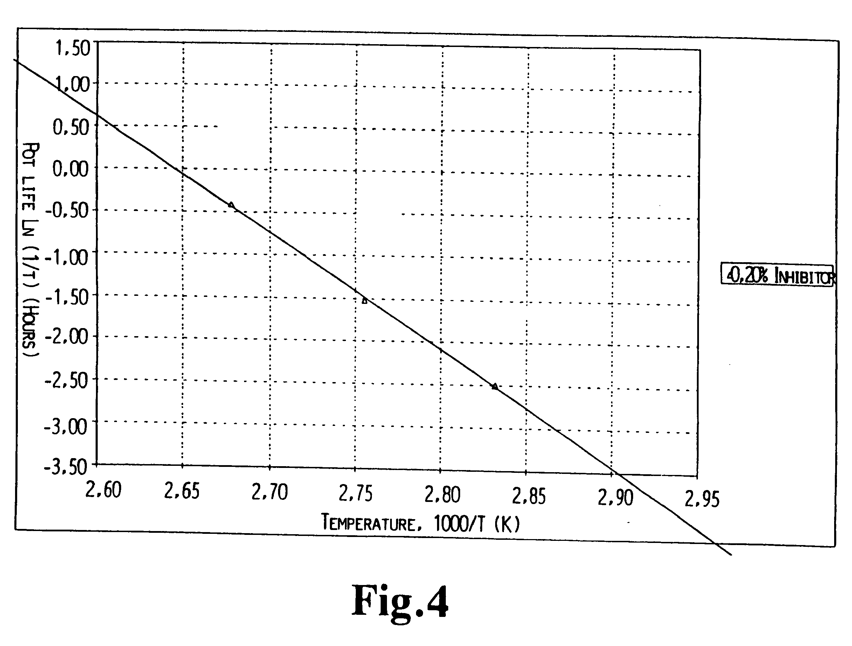

Experiments identical with the former experiment were performed at constant background temperatures of 71, 80, 90 and 100°C, respectively. According to the kinetics, the ration between the natural logarithm of the inverse of the open time (pot life) (t), ln(1/t), and the inverse absolute temperature (T) in °K, 1/T, should be linear. Figure 4 illustrates that this is valid for the polyester resin, and the graph reproduces the linear relationship between open time (t) and the temperature (T) for the polyester resin. Accordingly, these linear relationships can be used as a determination by interpolation of open time of a specific resin at a predetermined temperature.

Four parallel compositions were prepared having an inhibitor concentration of 0.05, 0.10 and 0.20 w% at each temperature level. The result from these experiments are summarized in Table 3 below, which shows the resulting curing time, exothermity and curing result.

### Reference example 3: Preparation of a DAP resin by using benzoylperoxide.

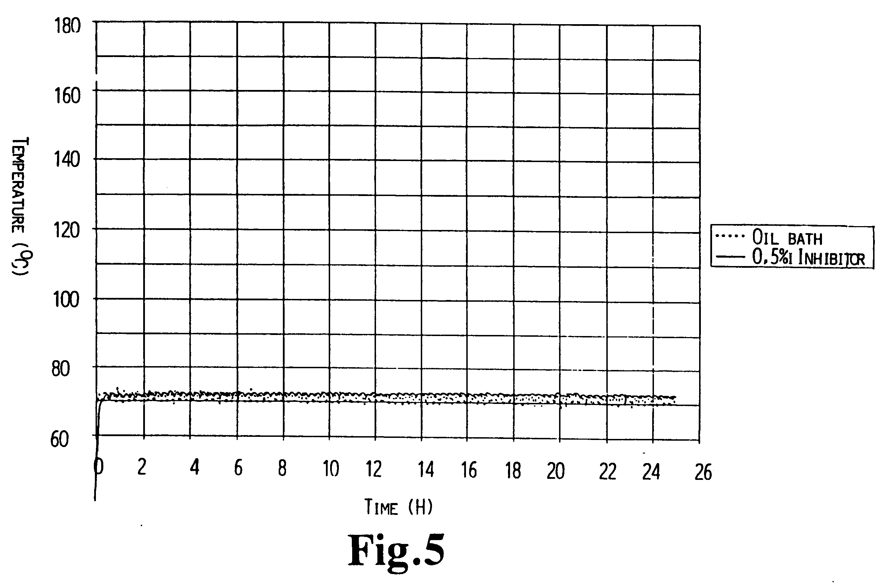

A resin was prepared from 100 g diallylphthalate, 1 g benzoylperoxide and 0.05 g *para-*benzoquinone. The homogenous liquid was transferred to a 25 ml graduated flask, which again was placed into a bath of silicon oil having a constant temperature of 72°C. The temperature both in the resin and the bath were recorded with time. The curing was performed at atmospheric pressure. Figure 5 shows the temperature proflie of the environments (the oil bath) and of the DAP resin at 72°C. No curing was obtained during 25 hours, and there was no exothermity.

Experiments identical with the former experiment were performed at constant background temperatures of 72, 82 and 92°C, respectively. Gelation was achieved only at 82 and 92°C, and then only at a low strength.

Parallel compositions were prepared having inhibitor concentrations of 0.05, 0.10 and 0.20 w% at each temperature level. The result from these experiments are summarized in Table 2 below, which in addition to the results from Example 1 above according to the invention shows the resulting curing time, exothermity and curing result.

### Reference example 4: Preparation of a prior art DAP resin by using peroxy-3,3,5-trimethylhexanoate.

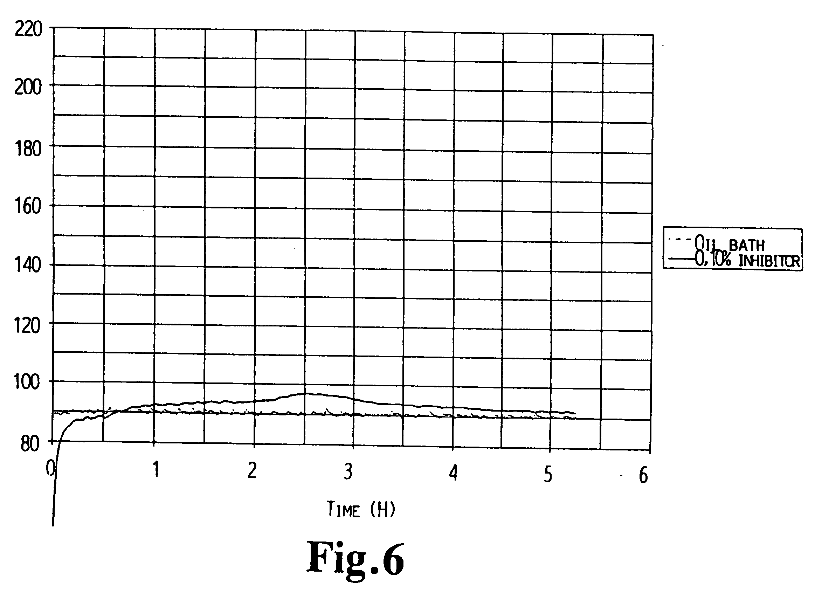

A resin was prepared from 100 g diallylphthalate, 1 g benzoylperoxide and 0.10 g *para-*benzoquinone. The homogenous liquid was transferred to a 25 ml graduated flask, which again was placed into a bath of silicon oil having a constant temperature of 92°C. The temperature of both the resin and the bath were recorded with time. The curing was performed at atmospheric pressure. Figure 6 shows the temperature profile of the environments (the oil bath) and of the DAP resin at 92°C. The exothermal curing reaction started apparently at 112 minutes, whereas maximum curing appeared after 133 minutes with an exotherm of 2.5°C.

Experiments identical with the former experiment were performed at constant background temperatures of 72, 82, and 92°C, respectively. Gelation was achieved only at 82 and 92°C, and then only with low strength.

Parallel compositions were prepared having inhibitor concentrations of 0.05, 0.10 and 0.20 w% at each temperature level. The result from these experiments are summarized in Table 3 below, which in addition to the results from Example 2 according to the invention show the resulting curing time, exothermity and result after curing.

**Table 2. Curing with initiator Cadox 40E (benzoyl peroxide)**

| *Compound* | *Curing temp.[°C]* | *Inhibitor quantity [%]* | *Curing time [h]* | *Exotherm [dT °C]* | *Result* |
|---|---|---|---|---|---|
| *Polyester*/ *vinyltoluene*/ *diallylphthalate (Example 1)* | 65 | 0.05 | 5.7 | 115 | Cured |
| | | 0.10 | 11.7 | 99 | " |
| | | 0.20 | - | - | Not cured |
| | 70 | 0.05 | 2.6 | 118 | Cured |
| | | 0.10 | 5.4 | 106 | |
| | | 0.20 | 13.0 | 81 | |
| | 75 | 0.05 | 1.5 | 126 | Cured |
| | | 0.10 | 3.4 | 120 | |
| | | 0.20 | 7.5 | 102 | |
| | 80 | 0.05 | 0.7 | 114 | Cured |
| | | 0.10 | 1.6 | 112 | |
| | | 0.20 | 3.7 | 106 | |
| *Diallylphthalate (Example 3)* | 70 | 0.05 | - | ~0 | Gelled/low |
| | | 0.10 | - | ~0 | strength |
| | | 0.20 | - | ~0 | |
| | 80 | 0.05 | 5.0 | 3 | Gelled/low |
| | | 0.10 | 5.1 | 3 | strength |
| | | 0.20 | 5.1 | ~0 | |
| | 90 | 0.05 | 1.2 | 6 | Gelled/low |
| | | 0.10 | 2.0 | 3 | strength |
| | | 0.20 | 2.0 | 3 | |

**Table 3 Curing with initiator Trigonox 42S (tert-butyl peroxy-3,3,5-trimethylhexanoate)**

| *Compound* | *Curing temp. [°C]* | *Inhibitor quantity [%]* | *Curing time [h]* | *Exotherm [dT °C]* | *Result* |
|---|---|---|---|---|---|
| *Polyester*/ *vinyltoluene*/ *diallylphthalate (Example 2)* | 70 | 0.05 | 12.5 | 20 | Cured |
| | | 0.10 | 20.3 | 10 | " |
| | | 0.20 | - | - | Not cured |
| | 80 | 0.05 | 4.7 | 119 | Cured |
| | | 0.10 | 7.9 | 120 | " |
| | | 0.20 | 12.2 | 89 | " |
| | | 0.40 | 17.7 | 16 | " |
| | | 0.60 | - | - | Not cured |
| | 90 | 0.05 | 1.6 | 121 | Cured |
| | | 0.10 | 2.9 | 122 | " |
| | | 0.20 | 4.6 | 118 | " |
| | | 0.40 | 7.2 | 84 | " |
| *Polyester*/ *vinyltoluene*/ *diallylphthalate*.... .. | 100 | 0.05 | 0.4 | 111 | Cured |
| | | 0.10 | 0.9 | 123 | " |
| | | 0.20 | 1.5 | 116 | " |
| | | 0.40 | 2.6 | 97 | " |
| | | 0.60 | - | - | Not cured |
| *Diallylphthalate (Example 4)* | 90 | 0.05 | 22 | ~0 | Gelled/low |
| | | 0.10 | - | ~0 | strength |
| | | 0.20 | - | ~0 | Not cured |
| | | 0.40 | - | ~0 | " " |
| | 100 | 0.05 | 4 | 6 | Low strength |
| | | 0.10 | 6 | | 3 " " |
| | | 0.20 | 10 | 3 | " " |
| | 110 | 0.05 | 1.5 | 40 | Low strength |
| | | 0.10 | 2 | 35 | " " |
| | | 0.20 | 3 | 9 | " " |
| | | 0.40 | - | ~0 | No gelation |
| | 120 | 0.05 | 0.25 | 65 | Low strength |
| | | 0.10 | 0.40 | 40 | " " |
| | | 0.20 | 1.2 | 45 | " " |
| | | 0.40 | 1.8 | 5 | " " |

As is evident from Table 2 and 3 above, the prior art diallylphthalate-based composition generally geled poorly with both of the initiators used in these experiments. The strength of the cured mass is generally low. The curing heat emission is also low, and the heat production occurs at a temperature of 110-120°C. The experiments with diallylphthalate and initiator and inhibitor at identical concentrations show that there was no curing below 80°C, and the curing temperature had to be at least 110°C before the exotherm exceeded dt=6°C. The exotherm was generally much lower: dT=8-60°C at 120°C and dT=6°C in the range 80-100°C. Strength establishment does not occur simultaneously with the exotherm. At 120°C the exotherms appeared between 0.25 and 2 hours, whereas there was no significant strength establishment after 6 hours. Curing at 100°C produced an exotherm of a maximum of 6 °C in the range of 4-10 hours. Not until 24 hours was the strength sufficiently high to complicate withdrawal of the thermo element out from the sample.

To the contrary, the polymer based composition according to the invention exhibits an applicable temperature range of 65-100°C with the initiators and inhibitors used. The exothermity expressed as temperature increase (dT) constitutes in general 120°C at an inhibitor concentration of 0.05 w%, and the strength establishment occurs instantaneously. Moreover, the resulting cured mass exhibited practically no shrink, contrary to the prior art DAP based resin.

## Claims

1. An agent for establishing different types of zone sealings in oil and gas wells and other types of wells, comprising an initiator for heat-induced production of free radicals, a pot lift extending inhibitor for stabilisation of free radicals and, optionally, filler materials and other additives, **characterized in that** said agent further comprises
at least partly unsaturated prepolymer selected from the group consisting of polyester and epoxy-vinyl ester, and
at least one vinyl-containing co-monomer.

2. The agent of claim 1,
**characterized in that** said vinyl-containing co-monomer is selected from the group consisting of styrene, vinyl toluene and acrylate compounds.

3. The agent of claim 2,
**characterized in that** said acrylate compound is selected from the group consisting of 2-hydroxy ethyl methacrylate and 2-hydroxy propyl methacrylate.

4. The agent of any one of claim 1 - 3,
**characterized in that** said prepolymer is present in a quantity of 15-75 weight parts and said vinyl-containing co-monomers in a quantity of 10-75 weight parts, wherein the total weight of prepolymer and co-monomer constitutes 100 weight parts, and initiator and inhibitor constitutes a portion of 0.1-5 and 0.02-2 weight pans, respectively.

5. The agent of claim 1,
**characterized in that** said filler material comprises spherical glass beads.

6. A method for establishing different types of zone sealings in oil, gas and other well types, wherein the zone in question to be sealed is supplied with a composition comprising
at least one monomer,
an initiator for heat-induced producton of free radicals,
a pot life extending inhibitor for stabilisation of free radicals, and
optionally one or more filler materials and other additives,
and then subjecting said composition to a radical polymerization initiated by heat in the well zone at a temperature in the range of 5-120°C and establishing a cured mass, particularly at temperatures in the range of 65-100°C,
**characterized in** supplying to the composition an at least partially unsaturated prepolymer selected from the group consisting of polyester and epoxy vinylester, and said at least one monomer in the form of at least one vinyl-containing co-monomer.

7. The method of claim 6,
**characterized in that** said vinyl-containing co-monomers are selected from the group consisting of styrene, vinyl toluene, 2-hydroxyethyl-methacrylate and 2-hydroxylpropyl-methacrylate.

8. The method of claim 6 or 7,
**characterized in** supplying said prepolymer in a quantity of from 15 to 75 weight parts and said vinyl-containing co-monomers in a quantity of from 10 to 75 weight parts, wherein the total weight of prepolymer and co-monomer constitutes 100 weight parts, and initiator and inhibitor constitutes a share of 0.1-5 and 0.02-2 weight parts, respectively.

9. The method of claim 6,
**characterized in** using spherical glass beads as said filler material.

## Patentansprüche

1. Mittel zum Erstellen verschiedener Arten von Bereichsabdichtungen in Erdöl- und Gasbohrlöchern und anderen Arten von Quellen, umfassend einen Initiator zur wärmeinduzierten Bildung von freien Radikalen, einen Topfzeit verlängernden Inhibitor zum Stabilisieren von freien Radikalen und optional Füllmaterialien und andere Zusatzstoffe, **dadurch gekennzeichnet, dass** das Mittel ferner umfasst:
mindestens ein teilweise ungesättigtes Vorpolymerisat, das aus der Gruppe bestehend aus Polyester und Epoxidvinylester ausgewählt ist, und
mindestens ein Vinyl enthaltendes Comonomer.

2. Mittel nach Anspruch 1, **dadurch gekennzeichnet, dass** das Vinyl enthaltende Comonomer aus der Gruppe bestehend aus Styren-, Vinyltoluen- und Acrylatverbindungen ausgewählt ist.

3. Mittel nach Anspruch 2, **dadurch gekennzeichnet, dass** die Acrylatverbindung aus der Gruppe bestehend aus 2-Hydroxyethylmethacrylat und 2-Hydroxypropylmethacrylat ausgewählt ist.

4. Mittel nach einem der Ansprüche 1 - 3, **dadurch gekennzeichnet, dass** das Vorpolymerisat in einer Menge von 15-75 Gewichtsteilen und die Vinyl enthaltenden Comonomere in einer Menge von 10-75 Gewichtsteilen vorhanden ist, wobei das Gesamtgewicht von Vorpolymerisat und Comonomer 100 Gewichtsteile ausmacht, und Initiator und Inhibitor einen Anteil von 0,1-5 bzw. 0,02-2 Gewichtsteilen ausmachen.

5. Mittel nach Anspruch 1, **dadurch gekennzeichnet, dass** das Füllmaterial kugelförmige Glasperlen umfasst.

6. Verfahren zum Erstellen verschiedener Arten von Bereichsabdichtungen in Erdöl-, Erdgas- und anderen Bohrlocharten, wobei der fragliche Bereich, der abzudichten ist, mit einer Zusammensetzung versehen ist, umfassend
mindestens ein Monomer,
einen Initiator zur wärmeinduzierten Bildung von freien Radikalen, und
optional ein oder mehrere Füllmaterialien und andere Zusatzstoffe,
und wobei dann die Zusammensetzung einer Radikal-Polymerisierung unterworfen ist, die durch Wärme in der Bohrlochzone bei einer Temperatur im Bereich von 5-120 °C in Gang gesetzt ist, und eine gehärtete Masse gebildet ist, besonders bei Temperaturen im Bereich 65-100 °C,
durch das Zuführen von einem mindestens teilweise ungesättigten Vorpolymerisat, das aus der Gruppe bestehend aus Polyester und Epoxidvinylester gewählt ist, zur Zusammensetzung **gekennzeichnet**, wobei das mindestens eine Monomer in der Form von mindestens einem Vinyl enthaltenden Comonomer ist.

7. Verfahren nach Anspruch 6, **dadurch gekennzeichnet, dass** die Vinyl enthaltenden Comonomere aus der Gruppe bestehend aus Styren, Vinyltoluen, 2-Hydroxyethylmethacrylat und 2-Hydroxylpropylmethacrylat ausgewählt sind.

8. Verfahren nach Anspruch 6 oder 7, durch die Bereitstellung des Vorpolymerisats in einer Menge von 15 bis 75 Gewichtsteilen und der Vinyl enthaltenden Comonomere in einer Menge von 10 bis 75 Gewichtsteilen **gekennzeichnet**, wobei das Gesamtgewicht von Vorpolymerisat und Comonomer sich auf 100 Gewichtsteile beläuft und Initiator und Inhibitor einen Anteil von 0,1-5 bzw. 0,02-2 Gewichtsteilen ausmachen.

9. Verfahren nach Anspruch 6, durch das Verwenden von kugelförmigen Glasperlen als Füllmaterial **gekennzeichnet**.

## Revendications

1. Agent pour réaliser différents types de zones d'étanchéité dans les puits de gaz et de pétrole et dans d'autres types de puits, comprenant un initiateur pour produire par induction de chaleur des radicaux libres, un inhibiteur extensible en cours de vie pour stabiliser les radicaux libres et, optionnellement, des matériaux de remplissage et d'autres additifs, **caractérisé en ce que** ce dit agent comprend
au moins un prépolymère partiellement insaturé sélectionné parmi le groupe consistant en : polyester et époxy - vinyle ester, et
au moins un vinyle contenant un co-monomère.

2. Agent selon la revendication 1, **caractérisé en ce que** le dit vinyle contenant un co-monomère est sélectionné parmi le groupe consistant en les composés de : styrène, vinyle toluène et acrylate.

3. Agent selon la revendication 2, **caractérisé en ce que** le dit composé acrylate est sélectionné parmi le groupe consistant en : 2-hydroxy éthyle méthacrylate et 2-hydroxy propyle méthacrylate

4. Agent selon l'une des revendications 1-3, **caractérisé en ce que** le dit prépolymère est présent en quantité de 15-75 pourcent en poids et le dit vinyle contenant un co-monomère en quantité de 10-15 pourcent en poids, le poids total du prépolymère et du co-monomère constituant 100 pourcent en poids, et l'initiateur et l'inhibiteur constituent une portion de 0.1-5 et 0.02-2 pourcent en poids, respectivement.

5. Agent selon la revendication 1, **caractérisé en ce que** le dit matériau de remplissage comprend des billes de verre sphériques.

6. Procédé pour réaliser différents types de zones d'étanchéité dans les puits de gaz et de pétrole et dans d'autres types de puits, où la zone en question qui doit être étanchéifiée est alimentée par une composition comprenant
au moins un monomère,
un initiateur pour produire par induction de chaleur des radicaux libres,
un inhibiteur extensible en cours de vie pour stabiliser les radicaux libres, et optionnellement, un ou plusieurs matériaux de remplissage et d'autres additifs,
et ensuite soumettre la dite composition à une polymérisation radicale déclenchée par chaleur dans la zone du puits à une température dans l'intervalle 5-120°C et réaliser une masse séchée, particulièrement aux températures dans l'intervalle 65-100°C, **caractérisé en ce que** l'on fournit à la composition au moins un prépolymère insaturé sélectionné parmi le groupe consistant en :polyester et époxy - vinyle ester, et le dit au moins un monomère dans la forme d'au moins un vinyle contenant un co-monomère.

7. Procédé selon la revendication 6, **caractérisé en ce que** les dits vinyle contenant des co-monomères sont sélectionnées parmi le groupe consistant en :styrène, vinyle toluène, 2-hydroxyethyle-methacryleate et 2-hydroxylepropylemethacryleate.

8. Procédé selon la revendication 6 ou 7, **caractérisé en ce que** l'on fournit le dit prépolymère en quantité de 15 à 75 pourcent en poids et le dit vinyle contenant des co-monomères en quantité de 10 à 15 pourcent en poids, le poids total de prépolymère et de co-monomère constituant 100 pourcent en poids, et l'initiateur et l'inhibiteur constituant une part de 0.1-5 et 0.02-2 pourcent en poids, respectivement.

9. Procédé selon la revendication 6 **caractérisé en ce que** l'on utilise des billes de verre sphériques comme matériau de remplissage.
